# DEMANDE DE BREVET EUROPEEN

(11) **EP 1 959 371 A1**
(43) Date de publication de la demande: **20.08.2008**
(21) Numéro de dépôt: 08101496.1
(22) Date de dépôt: 12.02.2008
(51) Int. Cl.: G06F 21/22

(54) **Couplage d'un programme informatique ou de données á un système de référence et vérification associée**

(30) Priorité: 13.02.2007 FR 0701024
(71) Demandeur: France Telecom, 75015 Paris (FR)
(72) Inventeur: Francfort, Stanislas, 14210, EVRECY (FR); Gadacha, Haythem, 75015, PARIS (FR); Benadjila, Ryad, 75020, PARIS (FR); Nochimowski, Alain c/o M. INTRATOR, 94300, VINCENNES (FR)
(74) Mandataire: Cabinet Plasseraud

(57) **Abrégé**

L'invention concerne un procédé de couplage à un système de référence (1) d'un programme informatique et/ou de données, la mise en oeuvre du programme informatique et/ou l'accès aux données étant réalisé par l'exécution d'un logiciel, un groupe de paramètres étant associé au système de référence. Le procédé comprend la protection d'une valeur V0 associée au système de référence et nécessaire à l'exécution dudit logiciel, en relation avec au moins un paramètre dudit groupe de paramètres. La protection de la valeur V0 comprend la mémorisation d'au moins un couple de données comportant une fonction g_i d'au moins un paramètre dudit groupe de paramètres et une fonction h_i de la valeur V0.

## Description

La présente invention concerne le couplage d'un programme informatique et/ou de données à un système de référence.

La mise en oeuvre du programme informatique et/ou le fait d'accéder aux données étant réalisés par l'exécution d'un logiciel, l'invention peut donc aussi être vue comme relative à la réservation de l'exécution dudit logiciel à un système de référence.

En effet, des droits sont généralement attachés aux programmes informatiques et aux données, notamment pour protéger leurs éditeurs. On peut par exemple penser à des programmes informatiques visant certaines applications (bureautique, jeux, progiciels, etc.) ou à des données de type audio, vidéo ou multimédia (musique, films, etc.).

Un utilisateur ayant acquis légitimement un programme informatique et/ou des données obtient normalement le droit de les utiliser à titre personnel, sur un système de référence qu'il utilise.

En revanche, il peut être souhaitable qu'un utilisateur muni d'un système autre que le système de référence de l'utilisateur légitime et ayant acquis un programme informatique et/ou des données de façon illégitime, par exemple sur un réseau pirate où ceux-ci ont été distribués, ne puisse pas en disposer librement.

A cet effet, il est connu de coupler (ou ancrer) un programme informatique et/ou des données à un système de référence, de façon que ceux-ci ne puissent pas être exploités sur un autre système appartenant potentiellement à un utilisateur illégitime.

La tâche d'un attaquant voulant disposer de ce programme informatique et/ou de ces données est ainsi rendue plus complexe, puisque l'attaquant doit d'abord comprendre et casser le schéma de couplage au système de référence.

Selon une méthode existante, le couplage est réalisé en prenant et en stockant plusieurs paramètres caractéristiques du système de référence. Ces paramètres caractéristiques sont par exemple relatifs à la configuration du système.

Avant l'exécution, sur un système courant, du logiciel permettant la mise en oeuvre du programme informatique et/ou l'accès aux données, il est vérifié si les paramètres caractéristiques du système courant sont identiques à ceux du système de référence.

Dans l'affirmative, on en déduit que le système courant est bien le système de référence légitime auquel l'exécution du logiciel est réservée, et le logiciel peut alors être exécuté normalement.

Dans le cas contraire, on en conclut que le système courant diffère du système de référence et est donc illégitime. Le logiciel n'est alors pas exécuté, empêchant ainsi la mise en oeuvre du programme informatique et/ou l'accès aux données.

Cette méthode présente cependant l'inconvénient d'être peu flexible, car elle réalise un couplage permanent au système de référence. Si l'un des paramètres caractéristiques du système de référence est modifié, par exemple par suite d'un changement de configuration de ce système, le logiciel ne peut plus être exécuté sur le système de référence lui-même, empêchant ainsi son utilisateur de mettre en oeuvre le programme informatique et/ou d'accéder aux données qu'il a pourtant acquis légitimement.

Un autre type de couplage est donc souhaitable.

L'invention propose ainsi un procédé de couplage à un système de référence d'un programme informatique et/ou des données, la mise en oeuvre du programme informatique et/ou l'accès aux données étant réalisé par l'exécution d'un logiciel, un groupe de paramètres étant associé au système de référence. Le procédé comprend la protection d'une valeur V0 associée au système de référence et nécessaire à l'exécution dudit logiciel, en relation avec au moins un paramètre dudit groupe de paramètres. La protection de la valeur V0 comprend la mémorisation d'au moins un couple de données comportant une fonction g_i d'au moins un paramètre dudit groupe de paramètres et une fonction h_i de la valeur V0.

La protection de la valeur V0 permet au seul système de référence d'exécuter le logiciel. En effet, un système illégitime n'est pas capable de surmonter cette protection et donc de disposer de la valeur V0 nécessaire à l'exécution du logiciel. Dans le même temps, la valeur V0 protégée reste en relation avec au moins un paramètre dudit groupe de paramètres.

La protection de la valeur V0 peut avantageusement comprendre la constitution et la mémorisation d'une table comprenant, pour chaque élément t d'un ensemble de sous-ensembles dudit groupe de paramètres satisfaisant un critère prédéterminé, un couple de données (g_t(X) ; h_t(V0)), où g_i désigne une fonction dépendant de i, h_i désigne une fonction inversible, bijective et dépendant de i, et X désigne un élément dans l'ensemble de définition de g_t.

Avantageusement, la protection de la valeur V0 est faite en relation avec une partie seulement des paramètres dudit groupe de paramètres. Cela donne de la souplesse au système, car un changement de certains paramètres seulement du système de référence, par exemple du à un changement de configuration, ne représentera pas forcément une entrave à la bonne exécution du logiciel par ce système de référence.

Avantageusement, la protection de la valeur V0 est faite en relation uniquement avec des sous-ensembles dudit groupe de paramètres comprenant un nombre de paramètres supérieur à une valeur déterminée. Cela permet de maîtriser le nombre de changements de paramètres autorisés.

Avantageusement, la valeur V0 est spécifique au système de référence, pour augmenter la sécurité contre d'éventuelles attaques.

L'invention propose aussi un système de référence auquel un groupe de paramètres est associé et auquel un programme informatique et/ou de données sont à coupler, la mise en oeuvre du programme informatique et/ou l'accès aux données étant réalisé par l'exécution d'un logiciel. Le système de référence comprend des moyens pour protéger une valeur V0 associée au système de référence et nécessaire à l'exécution dudit logiciel, en relation avec au moins un paramètre dudit groupe de paramètres. Les moyens pour protéger la valeur V0 comprennent des moyens pour mémoriser au moins un couple de données comportant une fonction g_i d'au moins un paramètre dudit groupe de paramètres et une fonction h_i de la valeur V0.

L'invention propose en outre un produit programme d'ordinateur comprenant des instructions aptes à mettre en oeuvre, lorsqu'il est chargé et exécuté sur des moyens informatiques, un couplage à un système de référence d'un programme informatique et/ou de données, la mise en oeuvre du programme informatique et/ou l'accès aux données étant réalisé par l'exécution d'un logiciel, un groupe de paramètres étant associé au système de référence. Le couplage comprend la protection d'une valeur V0 associée au système de référence et nécessaire à l'exécution dudit logiciel, en relation avec au moins un paramètre dudit groupe de paramètres. La protection de la valeur V0 comprend la mémorisation d'au moins un couple de données comportant une fonction g_i d'au moins un paramètre dudit groupe de paramètres et une fonction h_i de la valeur V0.

L'invention propose aussi procédé de vérification qu'un système courant auquel un deuxième groupe de paramètres est associé est autorisé à exécuter un logiciel permettant la mise en oeuvre d'un programme informatique et/ou l'accès à des données, le programme informatique et/ou les données ayant été préalablement couplés à un système de référence auquel un premier groupe de paramètres est associé, en protégeant une valeur V0 associée au système de référence et nécessaire à l'exécution dudit logiciel, en relation avec au moins un paramètre du premier groupe de paramètres, la protection de la valeur V0 comprenant la mémorisation d'au moins un couple de données comportant une fonction g_i d'au moins un paramètre dudit groupe de paramètres et une fonction h_i de la valeur V0. Le procédé comprend le fait de retrouver la valeur V0 à partir d'au moins un paramètre dudit deuxième groupe de paramètres.

Le fait de retrouver la valeur V0 comprend avantageusement le fait de retrouver la fonction h_i de la valeur V0 à partir d'une fonction d'au moins un paramètre dudit deuxième groupe de paramètres corrélée à la fonction g_i.

L'invention propose également un système courant auquel un deuxième groupe de paramètres est associé, apte à vérifier qu'il est autorisé à exécuter un logiciel permettant la mise en oeuvre du programme informatique et/ou l'accès à des données, le programme informatique et/ou les données ayant été préalablement couplés à un système de référence auquel un premier groupe de paramètres est associé, en protégeant une valeur V0 associée au système de référence et nécessaire à l'exécution dudit logiciel, en relation avec au moins un paramètre du premier groupe de paramètres, la protection de la valeur V0 comprenant la mémorisation d'au moins un couple de données comportant une fonction g_i d'au moins un paramètre dudit groupe de paramètres et une fonction h_i de la valeur V0. Le système courant comprend des moyens pour retrouver la valeur V0 à partir d'au moins un paramètre dudit deuxième groupe de paramètres.

Les moyens pour retrouver la valeur V0 sont avantageusement agencés pour retrouver la fonction h_i de la valeur V0 à partir d'une fonction d'au moins un paramètre dudit deuxième groupe de paramètres corrélée à la fonction g_i.

L'invention propose encore un produit programme d'ordinateur comprenant des instructions aptes à mettre en oeuvre, lorsqu'il est chargé et exécuté sur des moyens informatiques, une vérification qu'un système courant auquel un deuxième groupe de paramètres est associé est autorisé à exécuter un logiciel permettant la mise en oeuvre d'un programme informatique et/ou l'accès à des données, le programme informatique et/ou les données ayant été préalablement couplés à un système de référence auquel un premier groupe de paramètres est associé, en protégeant une valeur V0 associée au système de référence et nécessaire à l'exécution dudit logiciel, en relation avec au moins un paramètre du premier groupe de paramètres, la protection de la valeur V0 comprenant la mémorisation d'au moins un couple de données comportant une fonction g_i d'au moins un paramètre dudit groupe de paramètres et une fonction h_i de la valeur V0. La vérification comprend le fait de retrouver la valeur V0 à partir d'au moins un paramètre dudit deuxième groupe de paramètres.

Le fait de retrouver la valeur V0 peut avantageusement comprendre le fait retrouver la fonction h_i de la valeur V0 à partir d'une fonction d'au moins un paramètre dudit deuxième groupe de paramètres corrélée à la fonction g_i.

D'autres particularités et avantages de la présente invention apparaîtront dans la description ci-après d'exemples de réalisation non limitatifs, en référence aux dessins annexés, dans lesquels :
- la figure 1 est un schéma représentant un exemple de systèmes relativement auxquels l'invention peut être mise en oeuvre ;
- la figure 2 est un organigramme montrant des étapes de couplage selon l'invention ;
- la figure 3 est un organigramme montrant des étapes de vérification selon un mode de réalisation de l'invention ; et
- la figure 4 est un organigramme montrant des étapes de vérification selon un autre mode de réalisation de l'invention.

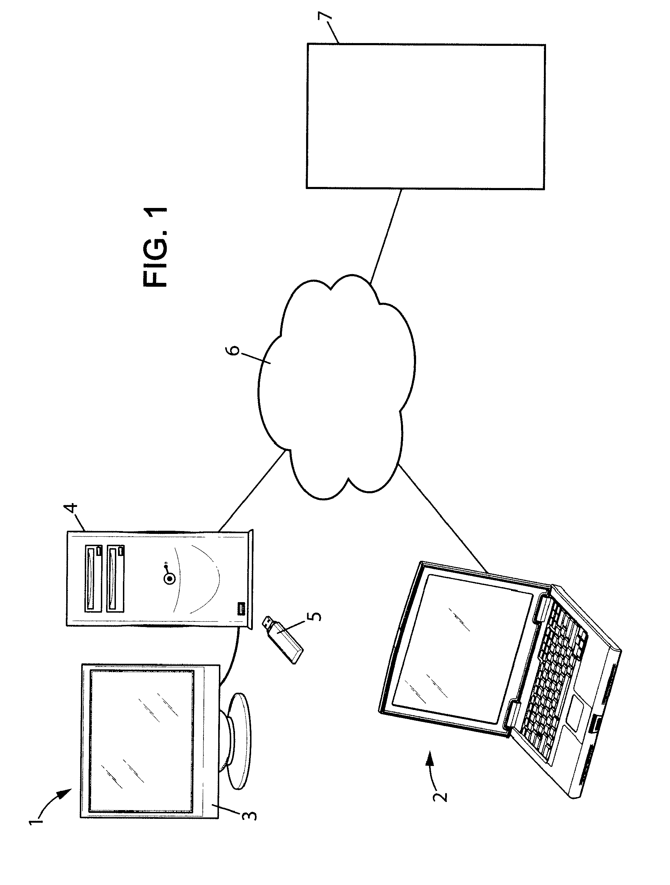

La figure 1 montre un système de référence 1, qui, dans l'exemple illustré, est un ordinateur comprenant notamment un écran 3, une unité centrale 4 et éventuellement des périphériques, comme une mémoire amovible 5 (clé USB, carte mémoire, etc.).

Ce système de référence 1 est couramment utilisé par un utilisateur ayant acquis légitimement un programme informatique et/ou des données. C'est à ce système de référence 1 que vont être couplés, selon la présente invention, ledit programme informatique et/ou lesdites données. Autrement dit, c'est à ce système de référence 1 que va être réservée l'exécution du logiciel permettant la mise en oeuvre dudit programme informatique et/ou le fait d'accéder auxdites données.

On comprendra que le système de référence 1 peut avoir d'autres formes que celle représentée sur la figure 1. Il peut notamment s'agir de tout type de terminal, tel qu'un ordinateur portable, un téléphone mobile, un assistant personnel numérique, etc. Il peut aussi s'agir d'un système d'information complexe comprenant un ensemble de machines distinctes mais coopérant entre elles.

La figure 1 montre également un système courant 2 qui sera détaillé par la suite, et qui, dans l'exemple illustré, a été représenté sous la forme d'un ordinateur portable. Là encore, le système courant 2 peut être tout type de terminal ou de système d'information, comme pour le système de référence 1. Comme cela apparaîtra par la suite, le système courant 2 peut en fait être confondu avec le système de référence 1.

Enfin, la figure 1 montre un serveur distant 7 comprenant des moyens de calcul et/ou de mémorisation et qui peut éventuellement être utilisé pour mettre en oeuvre tout ou partie des opérations mises en oeuvre dans le cadre de la présente invention. Lorsqu'il est utilisé, ce serveur distant 7 est avantageusement connecté au système de référence 1 et/ou système courant 2, par exemple par l'intermédiaire d'un réseau de communication 6.

Cela étant, l'invention pourrait être réalisée sans l'utilisation du serveur distant 7, ce qui présente l'avantage de ne pas nécessiter de transmission d'informations à l'extérieur du système de référence 1 et/ou du système courant 2, surtout lorsque le réseau 6 reliant ces différentes entités n'est pas sécurisé efficacement.

Selon un premier aspect de l'invention relatif au couplage, le programme informatique et/ou les données, dont la mise en oeuvre ou l'accès est assuré par l'exécution d'un logiciel, sont couplés au système de référence 1 en protégeant une valeur V0 associée au système de référence 1 et nécessaire à l'exécution dudit logiciel, en relation avec au moins un paramètre d'un groupe de paramètres P1, P2,..., Pn associé au système de référence 1.

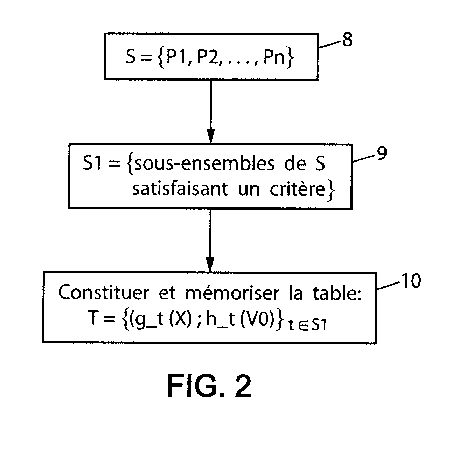

La figure 2 montre un exemple d'étapes pouvant être mises en oeuvre dans le cadre de ce couplage.

Chacun des paramètres P1, P2,..., Pn est relatif au système de référence 1. Certains d'entre eux peuvent par exemple être relatifs à la configuration du système de référence 1. En particulier, certains paramètres peuvent correspondre à des éléments du système de référence 1.

On peut par exemple citer les paramètres suivants : un numéro de série d'un disque dur, un numéro de série d'un processeur, un mot de passe de l'utilisateur régulier du système de référence, une base de registre, une taille de mémoire (RAM, ROM, mémoire graphique, etc.), un temps de réponse du système de référence (processeur, connexion réseau, etc.), une clé de chiffrement/déchiffrement stockée sur le système de référence ou sur un périphérique amovible, un champ créé lors du couplage, une adresse du système de référence, etc.

Une méthode d'homogénéisation des paramètres peut éventuellement être utilisée, par souci de simplification, de sorte que P1, P2,..., Pn appartiennent au même espace de représentation. Cela permet d'avoir un format de codage uniforme pour chacun des paramètres, ce qui peut être obtenu par exemple à l'aide de fonctions de hachage appliquées à certains des paramètres.

Le groupe de paramètres associé au système de référence 1 forme ainsi un ensemble S={P1, P2,..., Pn} (étape 8). Cet ensemble S peut être prédéfini. Il peut par exemple être mémorisé initialement sur le système de référence 1. Cela n'est cependant pas recommandé, car un attaquant ayant accès au système de référence 1 pourrait modifier le fichier correspondant. De préférence, cet ensemble S peut être constitué par exemple par interrogation des éléments correspondant aux paramètres.

Cet ensemble S peut être vu comme un ensemble caractéristique du système de référence 1 à un instant donné.

Un ensemble S1 peut être défini à partir de S, comme un ensemble de sous-ensembles de S satisfaisant un critère prédéterminé (étape 9). Le critère en question peut être divers.

Par exemple, S1 peut contenir tous les sous-ensembles de S ayant au moins p éléments, avec p<n. Ainsi, à titre illustratif, si n=4 et p=3, S1 comprend les sous-ensembles suivants de S : {P1, P2, P3}, {P1, P2, P4}, {P1, P3, P4}, {P2, P3, P4} et {P1, P2, P3, P4}.

Si p=1, S1 est constitué par les sous-ensembles correspondant à chacun des paramètres P1, P2,..., Pn pris individuellement. A l'opposé, si p=n, l'ensemble S1 se confond avec l'ensemble S = {P1, P2,..., Pn}.

Selon un autre exemple, S1 pourrait contenir les sous-ensembles de S définis par certaines combinaisons logiques, par exemple tous les sous-ensembles de S contenant P1 et (P2 ou P4). S1 pourrait ainsi ne contenir qu'une partie seulement des paramètres de S, les autres paramètres de S en étant exclus.

Bien sûr, tout autre critère est également envisageable.

Comme cela sera exposé par la suite, lorsque le couplage a été réalisé comme indiqué plus haut, la vérification de la légitimité du système courant 2 dépend de la définition de l'ensemble S1 et donc du critère auquel les sous-ensembles de S compris dans S1 satisfont. II en résulte une certaine souplesse, car la vérification peut aboutir positivement même lorsque certains paramètres du système de référence 1 et du système courant 2 diffèrent, pourvu que d'autres (regroupés dans S1) soient identiques.

Le critère auquel satisfont les sous-ensembles de S compris dans S1 peut ainsi être choisi précisément selon le niveau de souplesse souhaité. En particulier, S1 peut être choisi, selon le critère retenu, pour autoriser un nombre déterminé de changements de configuration du système de référence.

Une table T peut ensuite être constituée de la façon suivante (étape 10) : pour tout élément t de S1, on détermine un couple de données (g_t(X) ; h_t(V0)). Avantageusement, g_i désigne une fonction dépendant de i, h_i désigne une fonction inversible, bijective et dépendant de i, et X désigne un élément dans l'ensemble de définition de g_t. X peut éventuellement être choisi de façon arbitraire ou bien être prédéterminé.

Ainsi, dans l'exemple mentionné ci-dessus, où S1 comprend les sous-ensembles suivants de S: {P1, P2, P3}, {P1, P2, P4}, {P1, P3, P4}, {P2, P3, P4} et {P1, P2, P3, P4}, on obtient une table T comprenant cinq couples de données (g_t(X) ; h_t(V0)). De même, dans un exemple où S1 ne comprendrait que le paramètre P1 par exemple, un seul couple de données serait obtenu.

Avantageusement, l'inversion de la fonction h_i est relativement difficile. De plus, les fonctions g_i et h_i sont relativement complexes (notamment par comparaison avec des opérateurs logiques "si", "et", "ou", etc.). Cela rend leur ingénierie inverse consommatrice en temps et en effort, surtout si on fait appel à la protection logicielle.

De ce fait, dans la table T, la valeur V0 associée au système de référence 1 est dissimulée et donc protégée par application de la fonction h_t, tout en restant associée à certains paramètres du système de référence 1.

Plus généralement, on notera que la constitution de la table T est telle qu'elle ne permet pas à un attaquant d'outrepasser facilement le couplage au système de référence 1.

On note que la constitution de la table T peut être réalisée entièrement par le système de référence 1. En variante, elle peut l'être par le serveur distant 7 illustré sur la figure 1. Dans ce dernier cas, le serveur distant a connaissance de l'ensemble S1, qui lui a par exemple été communiqué préalablement par le système de référence 1. Selon une autre variante encore, la constitution de la table T peut résulter de l'action conjointe du système de référence 1 et du serveur distant 7.

La table T est en outre mémorisée (étape 10). Cette mémorisation est avantageusement effectuée sur le système de référence 1. Elle peut cependant aussi être faite en tout ou partie au niveau du serveur distant 7 par exemple.

On note que tout ou partie des opérations de couplage décrites ci-dessus peuvent l'être à l'aide d'un programme d'ordinateur comprenant des instructions appropriées. Ce programme d'ordinateur est chargé et exécuté sur des moyens informatiques, par exemple sur le système de référence 1 lui-même, sur le serveur distant 7, ou bien de façon distribuée entre ces deux entités par exemple.

Selon un autre aspect de l'invention relatif à la vérification qu'un système courant 2 est autorisé à exécuter le logiciel permettant la mise en oeuvre du programme informatique et/ou l'accès aux données, il est retrouvé la valeur V0 à partir d'au moins un paramètre d'un deuxième groupe de paramètres P'1, P'2,..., P'n associé au système courant 2.

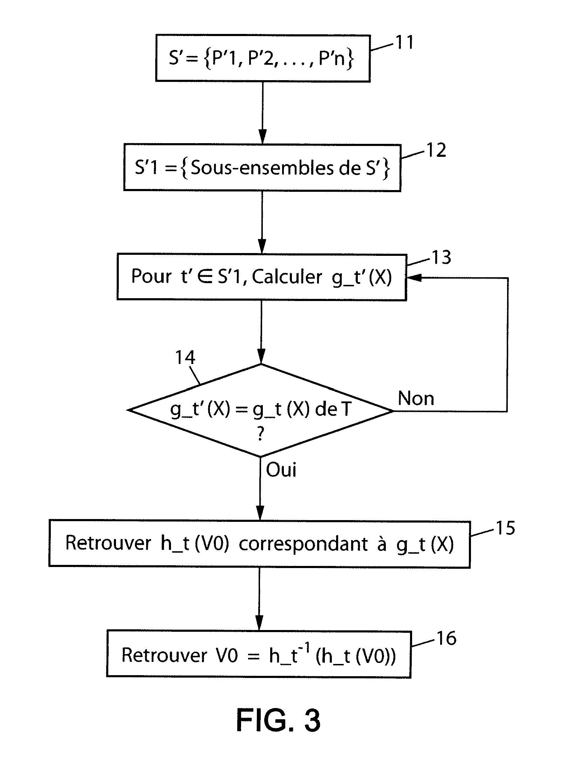

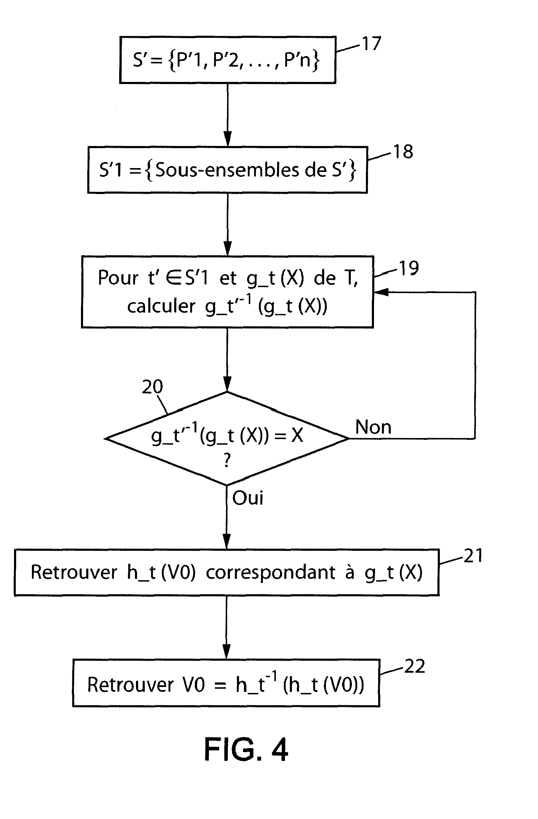

Les figures 3 et 4 montrent des variantes d'exemples de réalisation d'une vérification. Les étapes qui y figurent sont réalisées en amont d'une éventuelle exécution du logiciel.

On se place ainsi désormais dans le cas où un utilisateur souhaite obtenir l'exécution du logiciel réservée au système de référence 1 depuis un système courant 2. On peut considérer que si le système courant 2 est différent du système de référence 1, comme dans le cas illustré sur la figure 1, l'utilisateur en question est probablement illégitime, si bien qu'il ne doit pas pouvoir exécuter le logiciel. A l'inverse, si le système courant 2 est le même que le système de référence 1, on peut penser que cet utilisateur est légitime et l'exécution du logiciel doit lui être rendue possible.

Dans la suite de la description, on parle du système courant 2 sans préjuger du fait qu'il soit identique ou distinct du système de référence.

On se réfère désormais à la figure 3. L'exemple de vérification qui y est montré fait suite à l'exemple de couplage décrit précédemment en référence à la figure 2. Le mode de vérification est bien sûr adapté en fonction du mode de couplage préalablement effectué.

Le groupe de paramètres P'1, P'2,..., P'n associé au système courant 2 forme un ensemble S' = {P'1, P'2,..., P'n} (étape 11).

Ces paramètres sont du même type que les paramètres P1, P2,..., Pn relatifs au système de référence 1. Ils correspondent par exemple aux mêmes éléments que les paramètres P1, P2,..., Pn. De cette façon, si au moment de la vérification, le système courant 2 est en tous points identique au système de référence 1 tel qu'il se présentait au moment du couplage, on a P'1=P1, P'2=P2,..., P'n=Pn.

L'ensemble S' peut être prédéfini. Il peut par exemple être mémorisé initialement sur le système courant 2. De préférence, cet ensemble S' peut être constitué par exemple par interrogation des éléments correspondant aux paramètres.

Un ensemble S'1 peut être défini à partir de S', comme un ensemble de sous-ensembles de S' (étape 12). Si, lors de la vérification, on connaît l'ensemble S1 défini à l'étape 9, S'1 peut alors être choisi pour correspondre à S1. Dans ce cas, S'1 comprend les mêmes sous-ensembles de S' que S1 de S. Autrement dit, les sous-ensembles compris dans S'1 satisfont le même critère prédéterminé que ceux compris dans S1.

Dans le cas contraire, S'1 peut être défini différemment de S1. Par exemple, S'1 peut comprendre l'ensemble des sous-ensembles de S', sans considération d'un critère prédéterminé.

Pour au moins certains éléments t' de S'1, il est alors calculé g_t'(X), à l'aide de la fonction g_i et de l'élément X mentionnés plus haut (étape 13). Les éléments t' peuvent par exemple parcourir l'ensemble S'1 en commençant par les sous-ensembles contenant le plus de paramètres et en finissant par les sous-ensembles contenant le moins de paramètres. D'autres stratégies de parcours de l'ensemble S'1 sont bien sûr envisageables.

La valeur g_t'(X) ainsi obtenue est ensuite comparée à certaines au moins des valeurs g_t(X) mémorisées dans la table T (étape 14). Cela suppose bien sûr que la table T soit accessible depuis le système courant 2, soit parce qu'elle est mémorisée sur le système courant 2 (en particulier si le système courant 2 est le même que le système de référence 1), soit parce qu'elle est rendue accessible par exemple par l'intermédiaire du serveur distant 7 sur lequel elle est mémorisée.

La façon dont est parcourue la table T peut être diverse. La valeur g_t'(X) considérée peut par exemple être comparée aux valeurs g_t(X) mémorisées dans la table T dans l'ordre croissant ou décroissant de ces valeurs g_t(X), ou dans l'ordre de classification des valeurs g_t(X) dans la table T. On notera toutefois qu'un ordre de comparaison arbitraire pourrait également convenir.

Lorsque la valeur g_t'(X) considérée concorde avec une des valeurs g_t(X) de la table T, cela indique une égalité entre t et t', c'est-à-dire une identité entre certains sous-ensembles de paramètres du système de référence 1 et du système courant 2.

Dans ce cas, on retrouve la valeur h_t(V0) mémorisée dans la table T en correspondance avec cette valeur g_t(X) (étape 15). Puis, la valeur V0 est retrouvée par application de la fonction inverse de h_t à la valeur h_t(V0) retrouvée (étape 16).

Le système courant 2 dispose ainsi de la valeur V0 associée au système de référence 1 et nécessaire à l'exécution du logiciel. Cela revient à autoriser l'exécution du logiciel à l'utilisateur de ce système courant 2, parce qu'il est considéré que le système courant 2 coïncide suffisamment bien avec le système de référence 1.

Le fait que t et t' puissent désigner un sous-ensemble contenant un nombre de paramètres inférieur à n apporte la souplesse mentionnée plus haut. En effet, un changement de configuration du système de référence 1, par exemple impliquant la modification d'un ou plusieurs paramètres P1, P2,..., Pn, n'empêchera pas toujours son utilisateur légitime d'exécuter le logiciel, le système courant 2 étant quand même reconnu comme étant le système de référence 1.

Comme évoqué plus haut, on comprend que la définition de l'ensemble S1, sur la base d'un critère prédéterminé par exemple, joue un rôle important dans cette souplesse.

Si, contrairement à ce qui a été décrit plus haut, aucune valeur g_t(X) de la table T ne concorde avec la valeur g_t'(X) considérée à l'étape 14, un autre élément t' de S'1 est sélectionné pour calculer une nouvelle valeur g_t'(X) (étape 13).

Si tout l'ensemble S'1 a été parcouru sans avoir permis d'identifier une concordance entre une valeur g_t'(X) et une valeur g_t(X) de la table T, il peut alors être conclu que le système courant 2 et le système de référence 1 sont distincts, car ces deux systèmes comportent trop de paramètres différents selon le critère prédéterminé.

Dans ce cas, aucun accès à une valeur h_t(V0) n'est donné, et la valeur V0 n'est pas rendue accessible. De ce fait, l'exécution du logiciel ne peut avoir lieu sur le système courant 2.

La réservation de l'exécution du logiciel au système de référence 1 est ainsi assurée dans cet exemple.

L'exemple de vérification illustré sur la figure 4 comporte des étapes 17 et 18 identiques aux étapes 11 et 12 de la figure 3. Dans cet exemple de réalisation, la fonction g_i est inversible et bijective. Avantageusement, l'inversion de g_i est relativement difficile.

A l'étape 19, il est calculé la valeur g_t'⁻¹(g_t(X)) pour au moins certains éléments t' de S'1 et certaines au moins des valeurs g_t(X) mémorisées dans la table T, g_t'⁻¹ désignant la fonction inverse de g_t', qui est une fonction corrélée à g_t'. La façon dont S'1 est parcouru par t' et la façon dont les valeurs g_t(X) de la table T sont parcourues peuvent être similaires à ce qui a été décrit plus haut en référence à la figure 3.

La valeur g_t'⁻¹(g_t(X)) ainsi calculée est alors comparée à l'élément X défini plus haut (étape 20).

En cas de concordance, qui indique une égalité entre t et t', on retrouve la valeur h_t(V0) mémorisée dans la table T en correspondance avec la valeur g_t(X) utilisée dans l'expression g_t'⁻¹(g_t(X)) (étape 21). Puis, la valeur V0 est retrouvée par application de la fonction inverse de h_t à la valeur h_t(V0) retrouvée (étape 22). Ces étapes 21-22 correspondent sensiblement aux étapes 15-16 décrites précédemment en référence à la figure 3.

Si, au contraire de ce qui a été décrit plus haut, la valeur g_t'⁻¹(g_t(X)) considérée à l'étape 20 ne concorde pas avec l'élément X, un autre élément t' de S'1 est sélectionné pour calculer une nouvelle valeur g_t'⁻¹(g_t(X)) (étape 19).

Si tout l'ensemble S'1 a été parcouru sans avoir permis d'identifier une concordance entre une valeur g_t'⁻¹(g_t(X)) et l'élément X, il peut alors être conclu que le système courant 2 et le système de référence 1 sont distincts, car ces deux systèmes comportent trop de paramètres différents selon le critère prédéterminé.

On notera que les étapes de calcul décrites en référence aux étapes 13-16 et 19-22 peuvent être réalisées soit par le système courant 2, soit par le serveur distant 7 par exemple, soit de façon distribuée entre ces entités.

Par ailleurs, la vérification pourrait éventuellement être réalisée selon d'autres variantes que celles décrites en référence aux figures 3 et 4, pourvu qu'elles permettent de retrouver la valeur V0 à partir de la table T.

Par exemple, de façon un peu plus générale que dans les exemples qui précèdent, lorsque le couplage préalable du programme informatique et/ou des données au système de référence 1 comprend la mémorisation d'au moins un couple de données comportant une fonction g_i d'au moins un paramètre dudit premier groupe de paramètres et une fonction h_i de la valeur V0, la vérification peut alors comprendre le fait de retrouver la fonction h - de la valeur V0 à partir d'une fonction d'au moins un paramètre du groupe de paramètres P'1, P'2,..., P'n corrélée à la fonction g_i.

On note que tout ou partie des opérations de vérification décrites ci-dessus peuvent l'être à l'aide d'un programme d'ordinateur comprenant des instructions appropriées. Ce programme d'ordinateur est chargé et exécuté sur des moyens informatiques, par exemple sur le système courant 2 lui-même, sur le serveur distant 7, ou bien de façon distribuée entre ces deux entités par exemple.

Quand le système courant 2 dispose de V0, il est alors capable d'exécuter le logiciel permettant la mise en oeuvre du programme informatique et/ou l'accès aux données souhaités.

V0 peut par exemple constituer une clé de déchiffrement utilisée en combinaison avec un algorithme de déchiffrement f pour déchiffrer un ensemble d'instructions dudit programme informatique et/ou certaines au moins desdites données auxquelles l'accès est souhaité.

Même si l'algorithme de déchiffrement f était connu par des tiers, celui-ci comprend avantageusement des propriétés cryptographiques qui empêchent les tiers de retrouver V0, même par une recherche exhaustive.

Un déchiffrement, même effectué avec le bon algorithme f, mais avec une clé différente de V0, ne peut aboutir.

Dans un autre exemple relatif au cas où l'utilisateur du système courant 2 souhaite mettre en oeuvre un programme informatique, la valeur V0 peut par exemple représenter une valeur de saut (offset) dans le code du programme informatique, de façon à pointer sur les premières instructions permettant sa mise en oeuvre. A l'inverse, un saut réalisé dans le code du programme informatique avec une valeur différente de V0 ne permettra pas une mise en oeuvre correcte de ce programme.

D'autres exemples sont bien sûr envisageables, pourvu que seule la connaissance de la bonne valeur V0 permette une exécution correcte du logiciel. En général, bien que cela ne soit pas obligatoire, l'exécution correcte du logiciel est réalisée à l'aide d'une fonction dont V0 constitue une valeur d'entrée, comme c'est le cas dans l'exemple de l'algorithme de déchiffrement f mentionné plus haut. Cette fonction peut être présente initialement dans le logiciel ou bien lui être ajoutée, y compris sous la forme d'un module externe provisoirement relié au système courant 2.

De préférence, la valeur V0 utilisée est spécifique au système de référence 1, c'est-à-dire qu'un autre système aura une valeur V0' associée, différente de V0. Cela permet d'augmenter la résistance aux attaques. En effet, un attaquant ayant eu accès à la valeur V0' associée à un autre système, ne pourra pas l'utiliser pour exécuter le logiciel sur le système de référence 1.

De façon avantageuse, lorsqu'elle est utilisée, la table T peut être mise à jour relativement au système de référence 1 après le couplage initial. Cette mise à jour peut être déclenchée par exemple de façon périodique, à l'expiration d'un délai (timer), lorsqu'un compteur relatif à l'exécution du logiciel atteint un seuil déterminé, lorsqu'une modification d'un des paramètres P1, P2,..., Pn a été détectée, etc.

La mise à jour de la table T peut consister en une nouvelle génération de la table selon la même procédure que lors du couplage initial ou bien selon une procédure différente. Par exemple, le serveur distant 7 peut effectuer la mise à jour de la table T, alors que l'initialisation de cette dernière avait été faite par le système de référence 1.

Cette possibilité de mise à jour apporte une flexibilité supplémentaire, dans la mesure où elle peut permettre de tolérer plus de changements relatifs au système de référence 1, tels que des changements de configuration. De cette façon, l'exécution du logiciel est encore possible malgré une modification progressive de la configuration du système de référence 1, par exemple du fait que quelques éléments usés sont changés au fur et à mesure du vieillissement du système de référence 1.

Dans un exemple illustratif et non limitatif, décrit en adoptant les notations précédemment introduites, les fonctions g_i et h_i sont des algorithmes de chiffrement symétrique, tel que AES (Advanced Encryption Standard) par exemple, utilisant comme clé de chiffrement un hachage de la variable i réalisé à l'aide d'une fonction de hachage. Cette fonction de hachage peut par exemple être la fonction SHA-1 décrite dans le standard FIPS 180-1, "Secure hash standard", publié en avril 1993 par l'organisme Federal Information Processing Standards, et qui produit des condensés de 160 éléments binaires. Bien sûr d'autres fonctions de hachage sont également utilisables. Par ailleurs, un bloc de données connu est utilisé en guise d'élément X, par exemple un ensemble d'octets nuls.

## Revendications

1. Procédé de couplage à un système de référence (1) d'un programme informatique et/ou de données, la mise en oeuvre du programme informatique et/ou l'accès aux données étant réalisé par l'exécution d'un logiciel, un groupe de paramètres étant associé au système de référence, le procédé comprenant la protection d'une valeur V0 associée au système de référence et nécessaire à l'exécution dudit logiciel, en relation avec au moins un paramètre dudit groupe de paramètres, la protection de la valeur V0 comprenant la mémorisation d'au moins un couple de données comportant une fonction g_i d'au moins un paramètre dudit groupe de paramètres et une fonction h_i de la valeur V0.

2. Procédé selon la revendication 1, dans lequel la protection de la valeur V0 comprend la constitution et la mémorisation d'une table comprenant, pour chaque élément t d'un ensemble de sous-ensembles dudit groupe de paramètres satisfaisant un critère prédéterminé, un couple de données (g_t(X) ; h_t(V0)), où g_i désigne une fonction dépendant de i, h_i désigne une fonction inversible, bijective et dépendant de i, et X désigne un élément dans l'ensemble de définition de g_t.

3. Procédé selon la revendication 1 ou 2, dans lequel la protection de la valeur V0 est faite en relation avec une partie seulement des paramètres dudit groupe de paramètres.

4. Procédé selon l'une quelconque des revendications précédentes, dans lequel la protection de la valeur V0 est faite en relation uniquement avec des sous-ensembles dudit groupe de paramètres comprenant un nombre de paramètres supérieur à une valeur déterminée.

5. Procédé selon l'une quelconque des revendications précédentes, dans lequel la valeur V0 est spécifique au système de référence (1).

6. Système de référence (1) auquel un groupe de paramètres est associé et auquel un programme informatique et/ou des données sont à coupler, la mise en oeuvre du programme informatique et/ou l'accès aux données étant réalisé par l'exécution d'un logiciel, le système de référence comprenant des moyens pour protéger une valeur V0 associée au système de référence et nécessaire à l'exécution dudit logiciel, en relation avec au moins un paramètre dudit groupe de paramètres, les moyens pour protéger la valeur V0 comprenant des moyens pour mémoriser au moins un couple de données comportant une fonction g_i d'au moins un paramètre dudit groupe de paramètres et une fonction h_i de la valeur V0.

7. Produit programme d'ordinateur comprenant des instructions aptes à mettre en oeuvre, lorsqu'il est chargé et exécuté sur des moyens informatiques, un couplage à un système de référence (1) d'un programme informatique et/ou de données, la mise en oeuvre du programme informatique et/ou l'accès aux données étant réalisé par l'exécution d'un logiciel, un groupe de paramètres étant associé au système de référence, ledit couplage comprenant la protection d'une valeur V0 associée au système de référence et nécessaire à l'exécution dudit logiciel, en relation avec au moins un paramètre dudit groupe de paramètres, la protection de la valeur V0 comprenant la mémorisation d'au moins un couple de données comportant une fonction g_i d'au moins un paramètre dudit groupe de paramètres et une fonction h_i de la valeur V0.

8. Procédé de vérification qu'un système courant (2) auquel un deuxième groupe de paramètres est associé est autorisé à exécuter un logiciel permettant la mise en oeuvre d'un programme informatique et/ou l'accès à des données, le programme informatique et/ou les données ayant été préalablement couplés à un système de référence (1) auquel un premier groupe de paramètres est associé, en protégeant une valeur V0 associée au système de référence et nécessaire à l'exécution dudit logiciel, en relation avec au moins un paramètre du premier groupe de paramètres, la protection de la valeur V0 comprenant la mémorisation d'au moins un couple de données comportant une fonction g_i d'au moins un paramètre dudit groupe de paramètres et une fonction h_i de la valeur V0, le procédé comprenant le fait de retrouver la valeur V0 à partir d'au moins un paramètre dudit deuxième groupe de paramètres.

9. Procédé selon la revendication 8, dans lequel le fait de retrouver la valeur V0 comprend le fait de retrouver la fonction h_i de la valeur V0 à partir d'une fonction d'au moins un paramètre dudit deuxième groupe de paramètres corrélée à la fonction g_i.

10. Procédé selon la revendication 8 ou 9, dans lequel le couplage préalable du programme informatique et/ou des données au système de référence comprend la constitution et la mémorisation d'une table comprenant, pour chaque élément t d'un ensemble de sous-ensembles dudit premier groupe de paramètres satisfaisant un critère prédéterminé, un couple de données (g_t(X) ; h_t(V0)), où g_i désigne une fonction dépendant de i, h_i désigne une fonction inversible, bijective et dépendant de i, et X désigne un élément dans l'ensemble de définition de g_t, et dans lequel le fait de retrouver la valeur V0 comprend les étapes suivantes :
- calculer g_t'(X), pour au moins certains éléments t' d'un ensemble de sous-ensembles dudit deuxième groupe de paramètres ;
- comparer g_t'(X) à certaines au moins des données g_t(X) mémorisées dans la table ;
et en cas de concordance entre g_t'(X) et une donnée g_t(X) mémorisée dans la table :
- retrouver la valeur h_t(V0) mémorisée dans la table et appartenant au couple de données comprenant ladite donnée g_t(X) ; et
- appliquer la fonction inverse de h_t à h_t(V0) pour retrouver la valeur V0 associée au système de référence.

11. Procédé selon la revendication 8 ou 9, dans lequel le couplage préalable du programme informatique et/ou des données au système de référence comprend la constitution et la mémorisation d'une table comprenant, pour chaque élément t d'un ensemble de sous-ensembles dudit premier groupe de paramètres satisfaisant un critère prédéterminé, un couple de données (g_t(X) ; h_t(V0)), où g_i désigne une fonction inversible et bijective dépendant de i, h_i désigne une fonction inversible, bijective et dépendant de i, et X désigne un élément dans l'ensemble de définition de g_t, et dans lequel le fait de retrouver la valeur V0 comprend les étapes suivantes :
- appliquer, pour au moins certains éléments t' d'un ensemble de sous-ensembles dudit deuxième groupe de paramètres, la fonction inverse de g_t' à certaines au moins des données g_t(X) mémorisées dans la table ;
et en cas de concordance entre le résultat de l'application de la fonction inverse de g_t' à une donnée g_t(X) mémorisée dans la table et l'élément X :
- retrouver la valeur h_t(V0) mémorisée dans la table et appartenant au couple de données comprenant ladite donnée g_t(X) ; et
- appliquer la fonction inverse de h_t à h_t(V0) pour retrouver la valeur V0 associée au système de référence.

12. Système courant (2) auquel un deuxième groupe de paramètres est associé, apte à vérifier qu'il est autorisé à exécuter un logiciel permettant la mise en oeuvre du programme informatique et/ou l'accès à des données, le programme informatique et/ou les données ayant été préalablement couplés à un système de référence (1) auquel un premier groupe de paramètres est associé, en protégeant une valeur V0 associée au système de référence et nécessaire à l'exécution dudit logiciel, en relation avec au moins un paramètre du premier groupe de paramètres, la protection de la valeur V0 comprenant la mémorisation d'au moins un couple de données comportant une fonction g_i d'au moins un paramètre dudit groupe de paramètres et une fonction h_i de la valeur V0, le système courant comprenant des moyens pour retrouver la valeur V0 à partir d'au moins un paramètre dudit deuxième groupe de paramètres.

13. Produit programme d'ordinateur comprenant des instructions aptes à mettre en oeuvre, lorsqu'il est chargé et exécuté sur des moyens informatiques, une vérification qu'un système courant (2) auquel un deuxième groupe de paramètres est associé est autorisé à exécuter un logiciel permettant la mise en oeuvre d'un programme informatique et/ou l'accès à des données, le programme informatique et/ou les données ayant été préalablement couplés à un système de référence (1) auquel un premier groupe de paramètres est associé, en protégeant une valeur V0 associée au système de référence et nécessaire à l'exécution dudit logiciel, en relation avec au moins un paramètre du premier groupe de paramètres, la protection de la valeur V0 comprenant la mémorisation d'au moins un couple de données comportant une fonction g_i d'au moins un paramètre dudit groupe de paramètres et une fonction h_i de la valeur V0, la vérification comprenant le fait de retrouver la valeur V0 à partir d'au moins un paramètre dudit deuxième groupe de paramètres.
